# FASCICULE DE BREVET EUROPEEN

(11) **EP 2 714 491 B1**
(45) Date de publication et mention de la délivrance du brevet: **15.11.2017**
(21) Numéro de dépôt: 12724314.5
(22) Date de dépôt: 22.05.2012
(51) Int. Cl.: B62D 25/08, B60K 11/08, B62D 65/02

(54) **ENSEMBLE D'UNE ARMATURE DE FACE AVANT DE VÉHICULE AUTOMOBILE ET D'UN SUPPORT DESTINÉ À SUPPORTER UN ACTIONNEUR**
ANORDNUNG AUS EINEM FRONTFLÄCHENRAHMENELEMENT EINES KRAFTFAHRZEUGES UND EINEM BEFESTIGUNGSELEMENT ZUR STÜTZE EINES AKTUATORS
ASSEMBLY CONSISTING OF A MOTOR VEHICLE FRONT SURFACE FRAME ELEMENT AND A MOUNTING INTENDED TO SUPPORT AN ACTUATOR

(30) Priorité: 26.05.2011 FR 1154581
(43) Date de publication de la demande: 09.04.2014
(60) Demande divisionnaire: 14175675.9
(73) Titulaire: Valeo Systemes Thermiques, 78320 Le Mesnil Saint Denis (FR)
(72) Inventeur: LANARD, Jean-Louis, F-78810 Feucherolles (FR); VACCA, Frédérice, F-78910 Behoust (FR); PLENCHETTE, Julien, Livonia, Michigan 48150 (US); WILLIAMS, Mark, Brighton, Michigan 48114 (US)
(74) Mandataire: Metz, Gaëlle
(86) Numéro de dépôt international: PCT/EP2012/059506
(87) Numéro de publication internationale: WO 2012/160065

(56) Documents cités:
- EP-A1- 0 925 983
- EP-A1- 2 407 333
- EP-A2- 2 233 343
- DE-A1-102010 002 373
- DE-U1-202011 000 392
- FR-A1- 2 945 242

## Description

L'invention concerne un ensemble d'une armature, destinée à se trouver en face avant d'un véhicule automobile, et d'un support destiné à supporter un actionneur apte à entraîner un ou plusieurs organes devant être montés sur ladite armature. L'invention concerne également une armature d'un tel ensemble et un support d'un tel ensemble.

L'invention s'applique, notamment, à tout type de face avant et/ou de groupe moto ventilateur. Dans ce domaine, il est connu d'actionner des organes montés sur l'armature, notamment des volets d'aérations, à l'aide d'un actionneur rapporté directement sur l'armature.

De nombreuses technologies d'actionneurs existent comme par exemple des actionneurs utilisant des moteurs à courant continue ou des moteurs pas à pas.

Un ensemble d'armature conforme au préambule de la revendication 1 est montré par le document FR 2 945 242 A1.

Chacune des technologies proposent en outre des caractéristiques différentes, en terme de structure, de dimensions, de masse ou encore d'interfaces d'accrochage.

Afin de permettre à l'armature de recevoir l'actionneur, il est ainsi nécessaire de la modifier à chaque nouvel actionneur. Or, l'armature est une pièce de grande dimension, coûteuse et qui remplit de nombreuses fonctions autres que celle de support d'actionneur de volet d'aération. Il n'est donc pas très avantageux, d'un point de vu industrielle, de changer de structure d'armature à chaque fois que l'on change de type d'actionneurs.

L'invention a pour but de surmonter le problème précité.

Elle propose à cet effet un ensemble d'une armature telle que décrit par la revendication 1. Le ou les organes devant être montés sur ladite armature sont, notamment, des volets d'aérations permettant à un flux d'air extérieur de passer ou non au travers de la face avant du véhicule.

Ainsi, grâce à l'invention, il est possible d'utiliser la même armature, quelque soit le type de l'actionneur choisi.

Selon l'invention, les moyens de positionnement comprennent des moyens de pré positionnement et des moyens de fixation. Le support peut ainsi être mis en place sur le boîtier grâce aux moyens de pré positionnement et maintenu sur celui-ci grâce aux moyens de fixations. L'invention est ainsi caractérisée en ce que les moyens de pré positionnement comprennent au moins une nervure et au moins une rainure. La ou les nervures et la ou les rainures sont ici de formes complémentaire, c'est-à-dire que la ou les nervures pénètrent dans la ou les rainures de manière à assurer le pré positionnement du support sur l'armature. Avantageusement, la ou les nervures sont situées sur le support et la ou les rainures sont situées sur l'armature.

Selon un aspect de l'invention, les moyens de fixation comprennent un pion et un oeillet, situés en vis-à-vis, l'un étant situé sur le support et l'autre sur l'armature, ledit pion et ledit oeillet étant aptes à recevoir un élément de fixation. On comprend ici que le pion et l'oeillet sont en contact l'un avec l'autre et que la fixation du support sur l'armature est assurée grâce à un élément de fixation reçu par le pion et l'oeillet, notamment une vis. Avantageusement, le pion est situé sur l'armature et l'oeillet est situé sur le support.

Selon un exemple de réalisation ladite armature comprend un bras muni d'un corps à profil en « U », les dites rainures étant situées sur une paroi du corps, le pion prenant naissance au niveau d'une branche centrale du corps.

Selon un aspect de l'invention, le support comprend une première face possédant une zone de réception de l'actionneur.

Selon un autre aspect de l'invention, l'ensemble comprend un oeillet pour le positionnement du support sur l'armature, l'oeillet prenant naissance sur la première face du support au niveau d'une zone de fixation distinct de la zone de réception de l'actionneur et l'oeillet faisant saillie par rapport à la première face du support. Il pourra d'ailleurs s'agir de l'oeillet que comprennent les moyens de fixation de l'ensemble.

Selon un exemple de réalisation, les moyens de solidarisation du support comprennent au moins un ergot et au moins une agrafe, le ou les ergots et la ou les agrafes faisant saillies par rapport à la première face du support au niveau de la zone de réception de l'actionneur. Le ou les ergots peuvent ainsi pénétrer dans des trous présent sur l'actionneur alors que la ou les agrafes peuvent retenir l'actionneur plaqué contre la zone de réception.

Selon un aspect de l'invention, l'ensemble comprend des nervures, pour le positionnement du support sur l'armature, le support comprenant une deuxième face, opposée à la première, la ou les nervures prenant naissance sur la deuxième face et faisant saillies par rapport à celle-ci. Il pourra d'ailleurs s'agir de la ou des nervures que comprennent les moyens de pré positionnement de l'ensemble.

Selon un autre aspect de l'invention, le support a au moins deux points d'accroche sur l'armature situés de part et d'autre de la zone de réception de l'actionneur. Ces deux points d'accroche sont ainsi situés dans un plan perpendiculaire à la zone de réception, c'est-à-dire dans un plan perpendiculaire au plan dans lequel s'étend la première face, évitant ainsi au support d'être en porte à faux par rapport à l'armature.

Selon un exemple de réalisation, l'actionneur fait partie de l'ensemble conforme à l'invention.

L'invention concerne aussi une armature d'un ensemble tel que décrit précédemment et un support d'un ensemble tel que décrit précédemment.

Les figures annexées feront bien comprendre comment l'invention peut être réalisée. Sur ces figures, des références identiques désignent des éléments semblables.
La figure 1 est une vue partielle, en perspective, éclatée, d'un exemple d'ensemble conforme à l'invention, muni d'une armature, d'un support et d'un actionneur, l'actionneur étant monté sur le support.
La figure 2 est une vue partielle, en perspective, éclatée, de l'exemple de la figure 1, sans l'actionneur.

L'invention trouve son application, par exemple, dans une face avant de véhicule automobile et/ou dans un groupe moto ventilateur de véhicule automobile.

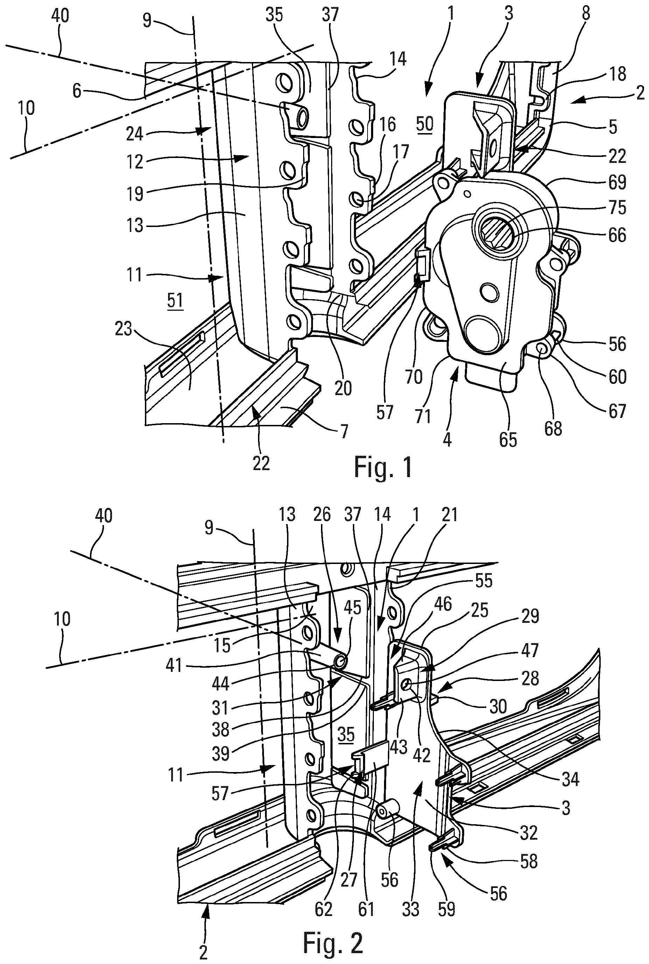

Un ensemble 1 conforme à l'invention est représenté partiellement en perspective éclatée sur la figure 1. Un tel ensemble 1 comprend une armature 2 de face avant de véhicule automobile et un support 3 pour un actionneur 4, apte à entraîner un ou plusieurs organes (non représentés) devant être montés sur l'armature 2, notamment des volets d'aération.

Ladite armature 2 pourra être prévue apte à être montée, pré équipée dudit support 3, dudit actionneur 4 et desdits organes entraînés par ce dernier, ainsi que d'éventuels autres organes, sur un châssis du véhicule.

L'armature 2 comprend, notamment, un cadre 5 de forme rectangulaire, c'est-à-dire que l'armature 2 comprend un coté supérieur 6, un coté inférieur 7, un coté droit 8 et un coté gauche (non représenté) reliés ensemble de manière à former un rectangle. Sur la figure 1, le coté supérieur 6 est situé au dessus du coté inférieur 7, parallèlement à celui-ci, le coté droit 8 étant situé du coté droit de la figure parallèlement au coté gauche non représenté.

L'armature 2 comprend également un bras 11 muni d'un corps 24 à profil en « U ». Le corps 24 comprend ainsi trois branches formant une base et deux ailes et reliant le coté supérieur 6 au coté inférieur 7 de l'armature. Le bras 11 possède donc une section en « U » dans un plan perpendiculaire à un axe latéral 9 d'extension du bras 11. Les trois branches comportent une première branche latérale 13, une deuxième branche latérale 14 et une branche centrale (référencée 15 sur la figure 2) reliant la première branche latérale 13 à la deuxième branche latérale 14. Les première et deuxième branches latérales 13, 14 s'étendent dans des plans perpendiculaire à un axe longitudinal 10 d'extension des cotés supérieur 6 et inférieur 7 du cadre, la première branche latérale 13 faisant face au coté gauche de l'armature, la deuxième branche latérale 14 faisant face au coté droit 8 de l'armature.

Le bras 11 peut être situé sur une zone centrale de l'armature 2. Le bras 11 sépare ainsi le cadre 5 en deux fenêtres, une fenêtre droite 50 située entre la deuxième branche latérale 14 du bras 11 et le coté droit 8 et une fenêtre gauche 51 située entre la première branche latérale 13 du bras 11 et le coté gauche de l'armature 2. Il pourra plus précisément relier les milieux du coté supérieur 6 et du coté inférieur 7 de l'armature 2.

On appelle extrémités distales 19 des premières branche latérale 13 et deuxième branche latérale 14, les extrémités du profil en « U » du corps 24 du bras 11 selon un plan perpendiculaire à l'axe latéral 9.

Le bras 11 comprend une extrémité inférieure 20 et une extrémité supérieure (référencée 21 sur la figure 2) selon l'axe latérale 9 qui le relient ici à une structure, par exemple métallique 23. Ces extrémités inférieure 20 et supérieure sont également reliées au niveau des extrémités distales 19 de la première et deuxième branches latérales 13, 14 au coté inférieur 7 et supérieur 6 de l'armature 2 respectivement.

La structure 23 est de forme rectangulaire également de sorte qu'elle est fixée, en plus du bras 11, au coté supérieur 6, au coté inférieur 7, au coté gauche et au coté droit 8 de l'armature 2.

Au niveau de l'extrémité inférieure 20 du bras 11, le coté inférieur 7 est interrompu ainsi que la structure 23 de sorte que les trois branches 12 du bras 11 forment une ouverture en « U » au niveau de cette extrémité inférieure 20. Cette ouverture en « U » permet à l'actionneur 4 de s'insérer à l'intérieur d'un volume délimité par les branches 12 du bras 11.

Les extrémités distales 19 des première branche latérale 13 et deuxième branche latérale 14 sont munies d'oreilles 16 comportant des trous 17. Ces trous 17 sont destinés à recevoir des axes d'articulation des volets d'aérations (non représenté) dont le rôle est de laisser passer, en position ouverte un flux d'air extérieur et d'empêcher, en position fermée, que ce même flux d'air passe.

A chaque trou 17 correspond une encoche 18 réalisée soit sur le coté droit 8 soit sur le coté gauche de l'armature 2. Ainsi, il est possible de positionner des volets entre la deuxième branche latérale 14 et le coté droit 8 c'est-à-dire dans la fenêtre droite 50, et des volets entre la première branche latérale 13 et le coté gauche de l'armature 2, c'est-à-dire dans la fenêtre gauche 51. Les volets sont alors soutenus d'un coté par les trous 17 des oreilles 16 de la première branche latérale 13 ou de la deuxième branche latérale 14 et de l'autre par les encoche 18 du coté droit 8 ou du coté gauche de l'armature 2.

Le corps 24 du bras 11 comprend également une paroi 35 s'étendant dans un plan perpendiculaire à l'axe longitudinale 10. La paroi 35 est ainsi parallèle aux premières et deuxième branches latérales, 13, 14. Il pourra s'agir soit d'une paroi distinct desdites branches latérales, soit d'une surépaisseur de matière de l'une d'elles, ici la deuxième branche latérale 14.

Dans la fenêtre droite 50 et la fenêtre gauche 51, c'est-à-dire les zones destinées à la réceptions des volets, sont disposées au niveau du coté supérieur 6 et inférieur 7 de l'armature 2 des butées 22 aptes à être en contact avec les volets d'aérations lorsqu'ils sont en position fermée.

La figure 2 permet d'illustrer le support 3. Un tel support 3 prend la forme d'une plaque 25 qui s'étend dans un plan perpendiculaire à l'axe longitudinal 10. Ladite plaque 25 comprend une première face 32 possédant une zone de réception 33 de l'actionneur 4 et une deuxième face 34 opposée à la première face 32. La première face 32 est ainsi apte à recevoir l'actionneur 4 au niveau de sa zone de réception 33 et fait face à la première branche latérale 13 alors que la deuxième face 34, opposée à la première face 32, fait face à la deuxième branche latérale 14.

Selon l'invention, l'ensemble 1 comprend des moyens de positionnement 26 du support 3 sur l'armature 2 et le support 3 comprend des moyens de solidarisation 27 destinés à supporter l'actionneur. L'ensemble 1 peut, notamment, comprendre l'actionneur.

La figure 2 permet également d'illustrer de manière plus détaillée les moyens de positionnement 26 et les moyens de solidarisation 27 selon l'invention ainsi que les zones de l'ensemble 1 sur lesquels ils se situent.

En effet, les moyens de positionnement 26 comprennent, par exemple des moyens de pré positionnement 28 et des moyens de fixation 29. Ces moyens de pré positionnement 28 comporte, notamment, au moins une nervure 30 et au moins une rainure 31.

Dans l'exemple de réalisation illustré à la figure 2, l'ensemble 1 comprend deux nervures 30 situées sur le support 3 (une seule étant visible) et deux rainures 31 situées sur l'armature 2.

Les nervures 30 sont situées sur la deuxième face 34 du support 3, c'est-à-dire qu'elles prennent naissance sur la deuxième face 34 du support 3 et qu'elles font saillie par rapport à celui-ci. Les nervures 30 s'étendent dans un plan perpendiculaire à l'axe latéral 9.

Les rainures 31 sont situées sur la paroi 35 de l'armature 2. Les rainures 31 sont des entailles réalisées dans la paroi 35 et s'étendent selon une direction parallèle à un premier axe 40 perpendiculaire à l'axe latéral 9 et l'axe longitudinal 10. Les rainures 31 sont bordées selon la direction dans laquelle elles s'étendent par un bord supérieur 38 et un bord inférieur 39. Les rainures 31 sont, notamment, de forme évasées, c'est-à-dire que la distance entre le bord supérieur 38 et le bord inférieur 39 décroît entre l'extrémité distale 37 de la paroi 35 et un fond de ladite rainure 31

Les rainures 31 et les nervures 30 sont de forme complémentaire de sorte que les nervures 30 pénètrent dans les rainures 31 jusqu'au moment où la diminution de la distance entre le bord supérieur 38 et le bord inférieur 39 des rainures 31 empêche les nervures 30 de continuer à s'insérer. Les rainures 31 et les nervures 30 jouent ainsi leurs rôles de positionnement du support 3 sur l'armature 2 et notamment de pré positionnement du support 3 sur l'armature 2.

Les moyens de fixation 29 comprennent un pion 41 et un oeillet 42, situées en vis-à-vis, le premier étant situé sur le support 3 et le second sur l'armature 2.

Le pion 41 est de forme cylindrique et prend naissance sur la branche centrale 15 du bras 11 de l'armature 2. Le pion 41 fait saillie par rapport à la branche centrale 15 et s'étend selon une direction parallèle au premier axe 40, c'est-à-dire parallèlement aux première et deuxième branches latérales 13, 14, du bras 11. Le pion 41 se situe ainsi entre la première branche latérale 13 et la deuxième branche latérale 14 et en particulier entre la première branche latérale 13 et la paroi 35 du bras 11. Le pion 41 possède une extrémité distale 44 en contact avec l'oeillet 42 lorsque l'ensemble 1 est assemblé. Le pion 41 est également muni d'un trou 45 apte à recevoir un élément de fixation, notamment une vis (non représentée).

L'oeillet 42 prend naissance sur la première face du support 3, et fait saillie par rapport à celle-ci. Il prend naissance en particulier au niveau d'une zone de fixation 55 distinct de la zone de réception 33 de l'actionneur afin de ne pas gêner la solidarisation de l'actionneur 4 sur le support 3. L'oeillet 42 possède une grande face 43 s'étendant dans un plan perpendiculaire au premier axe 40 et deux renforts 46 s'étendant dans des plans perpendiculaires à l'axe latéral 9 et permettant d'améliorer la résistance aux contraintes de l'oeillet 42. La grande face 43 de l'oeillet 42 est munie d'un trou 47 apte à recevoir l'élément de fixation, notamment la vis. Une fois l'ensemble 1 assemblé, la grande face 43 de l'oeillet 42 est en contact avec l'extrémité distale 44 du pion 41 de sorte que le trou 47 de l'oeillet 42 est aligné avec le trou 45 du pion 41 de manière à permettre l'introduction de l'élément de fixation. L'oeillet 42 et le pion 41 assure ainsi le positionnement du support 3 sur l'armature 2 et en particulier la fixation du support 3 sur l'armature 2.

Une fois l'ensemble 1 assemblé, la plaque 25 du support 3 se situe entre la paroi 35 de l'armature 2 et le pion 41, la deuxième face 34 du support 3 étant en contact avec la paroi 35 de l'armature 2, les nervures 30 coopérant avec les rainures 31 et l'oeillet 42 coopérant avec le pion 41. Le support 3 possède ainsi au moins un premier point d'accroche représenté par la coopération du pion 41 et de l'oeillet 42 et un deuxième point d'accroche représenté par la coopération entre une des nervures 30 et une des rainures 31. Le premier et le deuxième point d'accroche du support 3 sur l'armature 2 sont situés de part et d'autre de la zone de réception 33 de l'actionneur 4 de manière à éviter que le support 3 soit en porte à faux par rapport à l'armature 2.

Les moyens de solidarisation 27 du support 3 comprennent, au moins un ergot 56, notamment quatre ergots 56 et au moins une agrafe 57. Les quatre ergots 56 et l'agrafe 57 se situent sur la première face 32 du support 3, en particulier au niveau de la zone de réception 33 du support 3. Les quatre ergots 56 et l'agrafe 57 font saillies par rapport à la première face 32 du support 3 et s'étendent selon une direction parallèle à l'axe longitudinal 10. Les quatre ergots 56 et l'agrafe 57 se situent sur une périphérie de la zone de réception 33 de sorte que l'actionneur peut être positionné contre la zone de réception 33, entre les quatre ergots 56 et l'agrafe 57. L'agrafe 57 est notamment située entre deux des quatre ergots 56, du coté de la zone de réception 33 tournée vers la branche centrale 15.

Parmi les quatre ergots 56, trois sont en forme de croix selon une coupe réalisée dans un plan perpendiculaire à l'axe longitudinal 10 et le dernier est de forme cylindrique. Les trois ergots 56 en forme de croix possèdent une première section 58 et une deuxième section 59, selon un plan perpendiculaire à l'axe longitudinal 10, de dimensions différentes. La première section 58, située vers la zone de réception 33, est plus grande que la deuxième section 59 située vers l'extrémité distale des trois ergots 56 en forme de croix. Une butée est ainsi créée au niveau de la jonction entre la première et la deuxième section 58, 59.

L'agrafe 57 comprend une portion plane 61, qui s'étend dans un plan perpendiculaire au premier axe 40, qui se termine par une dent 62.

Il faut noter que l'armature 2 et tous les éléments décris précédemment que comprend l'armature 2 sont réalisés de manière unitaire c'est-à-dire qu'ils sont réalisés simultanément à partir de la même matière pour former une seule pièce. De la même manière le support 3 et tous les éléments décris précédemment que comprend le support 3 sont réalisés de manière unitaire c'est-à-dire qu'ils sont réalisés simultanément à partir de la même matière pour former une seule pièce.

La figure 1 permet de représenter l'actionneur 4 et d'illustrer comment les quatre ergots 56 et l'agrafe 57 remplissent leurs rôles de solidarisation de l'actionneur 4 sur le support 3.

L'actionneur 4 comprend un boîtier 65 entourant un moteur (non représenté), par exemple un moteur à courant continue ou un moteur pas à pas. Le moteur est apte à actionner les volets d'aération par l'intermédiaire d'un arbre (non représenté) qui s'étend selon une direction parallèle à l'axe longitudinale 10 et qui travers le boîtier 65 au niveau d'un trou 66 cylindrique, traversant de part en part le boîtier 65 et muni d'un système d'engrenage 75. C'est au niveau de ce trou 66 et en particulier grâce au système d'engrenage 75 que le moteur va transmettre un mouvement de rotation à l'arbre qui entraînera à son tour la rotation des volets d'une position d'ouverture vers une position de fermeture ou inversement.

Au niveau d'une périphérie de l'actionneur 4, sont disposés quatre brides 67 munis de trous 68 recevant les quatre ergots 56 du support 3. Trois des quatre brides 67 reçoivent ainsi les trois ergots 56 en forme de croix par l'intermédiaire de leurs trous 68 et une bride 67 reçoit l'ergot 56 de forme cylindrique par l'intermédiaire de son trou 68. Les trois brides 67 recevant les trois ergots 56 en forme de croix s'insèrent ainsi autour de ces ergots 56 jusqu'à ce qu'ils entrent en contact avec la butée 60. Lorsque les brides 67 sont dans cette position, un premier coté 69 du boîtier 65 de l'actionneur 4 est en contact contre la première face 32 du support 3 et en particulier en contact au niveau de la zone de réception 33. En outre, la portion plane de l'agrafe 57 est en contact avec un deuxième coté 70 de l'actionneur 4, perpendiculaire au premier coté 69 de l'actionneur 4 et la dent de l'agrafe 57 vient bloquer l'actionneur 4 au niveau d'un troisième coté 71 de l'actionneur 4 perpendiculaire au deuxième coté 70 et opposé au premier coté 69 par rapport au boîtier 65.

## Revendications

1. Ensemble (1) d'une armature (2), destinée à se trouver en face avant d'un véhicule automobile, et d'un support (3), dans lequel ledit ensemble (1) comprend des moyens de positionnement (26) du support (3) sur l'armature (2) et dans lequel ledit support (3) comprend des moyens de solidarisation (27) destinés à supporter un actionneur (4), apte à entraîner un ou plusieurs organes devant être montés sur ladite armature (2), les moyens de positionnement (26) comprenant des moyens de pré positionnement (28) et des moyens de fixation (29) **caractérisé en ce que** les moyens de pré positionnement (28) comprennent au moins une nervure (30) et au moins une rainure (31), la ou les nervures (30) étant situées sur le support (3) et la ou les rainures (31) étant situées sur l'armature (2).

2. Ensemble (1) selon l'une quelconque des revendications 1, dans lequel les moyens de fixation (29) comprennent un pion (41) et un oeillet (42), situés en vis-à-vis, l'un étant situé sur le support (3) et l'autre sur l'armature (2), ledit pion (41) et ledit oeillet (42) étant aptes à recevoir un élément de fixation.

3. Ensemble (1) selon la revendication 2, dans lequel le pion (41) est situé sur l'armature (2) et l'oeillet (42) est situé sur le support.

4. Ensemble (1) selon l'une quelconque des revendications 2 ou 3, dans lequel ladite armature (2) comprend un bras (11) muni d'un corps (24) à profil en « U », les dites rainures (31) étant situées sur une paroi (35) du corps (24), le pion (41) prenant naissance au niveau d'une branche centrale (15) du corps (24).

5. Ensemble (1) selon l'une quelconque des revendications précédentes, comprenant ledit actionneur (4).

## Patentansprüche

1. Anordnung (1) aus einer Verankerung (2) für eine Front eines Kraftfahrzeugs und aus einem Träger (3), wobei die Anordnung (1) Positionierungsmittel (26) des Trägers (3) an der Verankerung (2) umfasst und wobei der Träger (3) Mittel (27) zur festen Verbindung umfasst, die zum Stützen eines Aktuators (4) bestimmt sind, der ein oder mehrere Elemente antreiben kann, die an der Verankerung (2) angebracht werden, wobei die Positionierungsmittel (26) Vorpositionierungsmittel (28) und Befestigungsmittel (29) umfassen, **dadurch gekennzeichnet, dass** die Vorpositionierungsmittel (28) mindestens eine Rippe (30) und mindestens eine Nut (31) umfassen, wobei die Rippe oder die Rippen (30) an dem Träger (3) angeordnet ist bzw. sind und die Nut oder die Nuten (31) an der Verankerung (2) angeordnet ist bzw. sind.

2. Anordnung (1) nach einem der Ansprüche 1, wobei die Befestigungsmittel (29) einen Stift (41) und eine Öse (42) umfassen, die gegenüberliegend angeordnet sind, wobei eines am Träger (3) und das andere an der Verankerung (2) angeordnet ist, wobei der Stift (41) und die Öse (42) zur Aufnahme eines Befestigungselements ausgeführt sind.

3. Anordnung (1) nach Anspruch 2, wobei der Stift (41) an der Verankerung (2) angeordnet ist und die Öse (42) an dem Träger angeordnet ist.

4. Anordnung (1) nach einem der Ansprüche 2 oder 3, wobei die Verankerung (2) einen Arm (11) umfasst, der mit einem U-förmigen Körper (24) versehen ist, wobei die Nuten (31) an einer Wand (35) des Körpers (24) angeordnet sind, wobei der Stift (41) auf Höhe einer mittleren Abzweigung (15) des Körpers (24) hervortritt.

5. Anordnung (1) nach einem der vorhergehenden Ansprüche, die den Aktuator (4) umfasst.

## Claims

1. Assembly (1) of a framework (2), designed for the front face of a motor vehicle, and of a bracket (3), in which said assembly (1) includes means (26) for positioning the bracket (3) on the framework (2) and in which said bracket (3) includes rigid-attachment means (27) intended to hold an actuator (4) able to drive one or more members to be mounted on said framework (2), the positioning means (26) including pre-positioning means (28) and fixing means (29), **characterized in that** the pre-positioning means (28) include at least one rib (30) and at least one groove (31), the rib or ribs (30) being situated on the bracket (3) and the groove or grooves (31) being situated on the framework (2).

2. Assembly (1) according to any one of Claims 1, in which the fixing means (29) include a pin (41) and an eyelet (42) situated opposite one another, one being situated on the bracket (3) and the other on the framework (2), said pin (41) and said eyelet (42) being able to receive a fixing element.

3. Assembly (1) according to Claim 2, in which the pin (41) is situated on the framework (2) and the eyelet (42) is situated on the bracket.

4. Assembly (1) according to either one of Claims 2 and 3, in which said framework (2) includes an arm (11) provided with a body (24) having a "U"-shaped profile, said grooves (31) being situated on a wall (35) of the body (24), the pin (41) originating at a central branch (15) of the body (24).

5. Assembly (1) according to any one of the preceding claims, including said actuator (4).
